# EUROPÄISCHE PATENTSCHRIFT

(11) **EP 3 956 909 B1**
(45) Veröffentlichungstag und Bekanntmachung des Hinweises auf die Patenterteilung: **13.07.2022**
(21) Anmeldenummer: 21703671.4
(22) Anmeldetag: 04.02.2021
(51) Int. Cl.: H01F 5/00, H01F 27/30, H01F 27/36, H01F 38/14, H01F 27/26

(54) **SPULEN-MODUL UND VERFAHREN ZUR HERSTELLUNG EINER SPULEN-ANORDNUNG**
COIL MODULE AND METHOD FOR PRODUCING A COIL ASSEMBLY
MODULE DE BOBINE ET PROCÉDÉ DE PRODUCTION D'UN ENSEMBLE DE BOBINES

(30) Priorität: 12.02.2020 DE 102020201753
(43) Veröffentlichungstag der Anmeldung: 23.02.2022
(73) Patentinhaber: Würth Elektronik eiSos GmbH & Co. KG, 74638 Waldenburg (DE)
(72) Erfinder: SOM, Cem, 85604 Zorneding (DE); RICHTER, Klaus, 74232 Abstatt (DE)
(74) Vertreter: Rau, Schneck & Hübner Patentanwälte Rechtsanwälte PartGmbB
(86) Internationale Anmeldenummer: PCT/EP2021/052650
(87) Internationale Veröffentlichungsnummer: WO 2021/160508

(56) Entgegenhaltungen:
- JP-A- 2013 115 200
- US-A1- 2015 280 442
- US-A1- 2019 304 678

## Beschreibung

Die Erfindung betrifft ein Spulen-Modul zur Herstellung einer Spulen-Anordnung sowie eine Spulen-Anordnung mit mindestens zwei derartigen Spulen-Modulen. Ferner betrifft die Erfindung ein Verfahren zur Herstellung einer Spulen-Anordnung.

Aus der US 9,837,204 B2 ist eine Vorrichtung zur drahtlosen elektromagnetischen Übertragung von Energie bekannt. Die Vorrichtung dient beispielsweise zum Laden von Elektrofahrzeugen. Die Vorrichtung umfasst ein ortsfestes Basisladesystem und ein im Elektrofahrzeug angeordnetes Fahrzeugladesystem. Das Basisladesystem umfasst beispielsweise zwei Spulen, die nebeneinander auf einer Ferritplatte angeordnet und miteinander verschaltet sind.

Aus der CN 109 193 858 A ist eine drahtlose Ladevorrichtung bekannt. Die Ladevorrichtung umfasst einen magnetischen Kern und darauf angeordnete Spulen. Der magnetische Kern umfasst dreieckförmig oder sternförmig angeordnete Stäbe.

Aus der US 2015/0280442 A1 ist ein induktives Energieübertragungssystem bekannt. Das induktive Energieübertragungssystem umfasst nebeneinander angeordnete Spulenmodule, die jeweils einen hexagonalen Träger mit einer darauf angeordneten Spule umfassen.

Aus der JP 2013-115200 A ist ein induktives Energieübertragungssystem mit mehreren nebeneinander angeordneten Spulenmodulen bekannt.

Aus der US 2019/0304678 A1 ist eine Spuleneinheit mit einem Träger und einer darauf angeordneten Spule bekannt.

Der Erfindung liegt die Aufgabe zugrunde, ein Spulen-Modul zu schaffen, das in einfacher und flexibler Weise die Herstellung einer effizienten Spulen-Anordnung zur drahtlosen elektromagnetischen Energieübertragung ermöglicht.

Diese Aufgabe wird durch ein Spulen-Modul mit den Merkmalen des Anspruchs 1 gelöst. Das erfindungsgemäße Spulen-Modul ermöglicht aufgrund der polygonalen Grundform des Trägers in einfacher und flexibler Weise die Herstellung einer Spulen-Anordnung aus mehreren SpulenModulen. Aufgrund der polygonalen Grundform können die Träger der Spulen-Module in einfacher und flexibler Weise nebeneinander angeordnet und/oder aneinander befestigt werden. Es gilt vorzugsweise: 6 ≤ N ≤ 10, insbesondere N = 8. Der Träger muss - geometrisch betrachtet - im Wesentlichen die polygonale Grundform haben. Der Träger kann jedoch, beispielsweise aufgrund der Herstellung, abgerundete Ecken und/oder Kanten haben, so dass der Träger geringfügig von einer polygonalen Form abweichen kann. Aufgrund der Drehsymmetrie können die Spulen-Module in einfacher und flexibler Weise zur Herstellung einer Spulen-Anordnung nebeneinander angeordnet werden.

Zur Erzeugung eines elektromagnetischen Felds ist an dem Träger die Spule angeordnet. Vorzugsweise umfasst das Spulen-Modul genau eine Spule. Die Spule ist vorzugsweise innerhalb der polygonalen Grundform angeordnet. Anders ausgedrückt erstrecken sich die Windungen der Spule nicht seitlich über den Träger hinaus. Zur Herstellung einer Spulen-Anordnung können die Spulen der Spulen-Module einfach und flexibel in Reihe und/oder parallel geschaltet werden. Die elektrischen Eigenschaften der Spulen-Anordnung können hierdurch einfach und flexibel in gewünschter Weise angepasst werden. Dadurch, dass der Träger ein magnetisches Material umfasst, kann das elektromagnetische Feld in einfacher und flexibler Weise geführt und/oder abgeschirmt werden. Vorzugsweise ist das magnetische Material ein Ferritmaterial. Das Ferritmaterial umfasst insbesondere Mangan und Zink. Der Träger ist vorzugsweise aus dem magnetischen Material hergestellt.

Dadurch, dass zumindest zwei der Seitenbereiche ein jeweiliges Befestigungselement aufweisen, kann der Träger mit weiteren Trägern benachbarter Spulen-Module verbunden werden. Vorzugsweise dienen die Befestigungselemente zur formschlüssigen und/oder reibschlüssigen und/oder stoffschlüssigen Verbindung. Vorzugsweise weist der Träger mindestens ein erstes Befestigungselement und mindestens ein zweites Befestigungselement auf, die unterschiedlich zueinander ausgebildet sind. Vorzugsweise ist das jeweilige zweite Befestigungselement negativ zu dem jeweiligen ersten Befestigungselement geformt. Hierdurch kann ein erstes Befestigungselement eines Trägers mit einem zweiten Befestigungselement eines weiteren Trägers verbunden werden und umgekehrt. Dies ermöglicht eine einfache und flexible Verbindung der Spulen-Module zu einer Spulen-Anordnung.

Das erfindungsgemäße Spulen-Modul ermöglicht in einfacher Weise die Herstellung von Spulen-Anordnungen mit einer weitgehend beliebigen Form. Aufgrund der Form und/oder der Verschaltung der Spulen-Module kann die jeweilige Spulen-Anordnung flexibel an die gewünschte Anwendung angepasst werden, so dass eine hohe Effizienz bei der drahtlosen elektromagnetischen Energieübertragung erzielbar ist.

Ein Spulen-Modul nach Anspruch 2 gewährleistet eine einfache und flexible Herstellung einer effizienten Spulen-Anordnung. Vorzugsweise ist die Anzahl N ausgewählt aus der Zahlenmenge 4, 6, 8, 10 und 12. Vorzugsweise ist die Grundform ein Achteck bzw. ein Oktogon mit N = 8.

Ein Spulen-Modul nach Anspruch 3 gewährleistet eine einfache und flexible Herstellung einer effizienten Spulen-Anordnung. Vorzugsweise ist die Grundform regelmäßig. Eine regelmäßige Grundform bedeutet, dass das Polygon gleichseitig und gleichwinklig ist. Vorzugsweise ist die Grundform ein regelmäßiges Viereck, ein regelmäßiges Sechseck, ein regelmäßiges Achteck, ein regelmäßiges Zehneck oder ein regelmäßiges Zwölfeck.

Ein Spulen-Modul nach Anspruch 4 gewährleistet eine einfache und flexible Herstellung einer effizienten Spulen-Anordnung. Der Träger ist vorzugsweise eben ausgebildet. Der Träger umfasst eine Oberseite, eine Unterseite und dazwischen ausgebildete Seitenbereiche. Die Anzahl der Seitenbereiche entspricht der Anzahl N. Für eine Dicke D des Trägers gilt vorzugsweise: 1 mm ≤ D ≤ 12 mm, insbesondere 2 mm ≤ D ≤ 10 mm, und insbesondere 3 mm ≤ D ≤ 9 mm. Für eine maximale Abmessung A des Trägers parallel zu der Oberseite und/oder Unterseite gilt vorzugsweise: 15 mm ≤ A ≤ 200 mm, insbesondere 25 mm ≤ A ≤ 150 mm, und insbesondere 35 mm ≤ A ≤ 100 mm.

Ein Spulen-Modul nach Anspruch 5 gewährleistet eine einfache und flexible Herstellung einer effizienten Spulen-Anordnung. Der Träger umfasst vorzugsweise eine Oberseite und eine Unterseite, zwischen denen die Seitenbereiche angeordnet sind. Die Anzahl der Seitenbereiche entspricht der Anzahl N. Durch die Ausbildung der Seitenbereiche können die Träger von Spulen-Modulen zur Herstellung einer Spulen-Anordnung unmittelbar nebeneinander angeordnet werden. Die Träger können insbesondere Stoß an Stoß angeordnet werden.

Ein Spulen-Modul nach Anspruch 6 gewährleistet eine einfache und flexible Herstellung einer effizienten Spulen-Anordnung. Der Träger umfasst mindestens ein erstes Befestigungselement und mindestens ein zweites Befestigungselement, die unterschiedlich ausgebildet sind. Die Befestigungselemente dienen zum formschlüssigen und/oder reibschlüssigen und/oder stoffschlüssigen Verbinden mit einem Befestigungselement eines weiteren Trägers. Das zweite Befestigungselement ist vorzugsweise negativ geformt zu dem ersten Befestigungselement. Dies ermöglicht ein formschlüssiges und/oder reibschlüssiges und/oder stoffschlüssiges Verbinden eines ersten Befestigungselements eines ersten Trägers mit einem zweiten Befestigungselement eines zweiten Trägers und umgekehrt. Vorzugsweise sind in den Seitenbereichen in einer Umfangsrichtung abwechselnd erste und zweite Befestigungselemente angeordnet. Die Befestigungselemente ermöglichen eine einfache und flexible Verbindung der Spulen-Module zum Aufbau einer Spulen-Anordnung.

Ein Spulen-Modul nach Anspruch 7 gewährleistet eine einfache und flexible Herstellung einer effizienten Spulen-Anordnung. Vorzugsweise ist die Spule spiralförmig bzw. spiralartig gewickelt. Spiralförmig bedeutet insbesondere, dass ein Abstand von einer Wickelachse am äußeren Ende einer Windung größer als ein Abstand von der Wickelachse am inneren Anfang der Windung ist. Vorzugsweise liegen alle Windungen der Spule in einer Ebene. Die Spule ist vorzugsweise an einer Oberseite des Trägers angeordnet. Vorzugsweise bildet mindestens eine Windung, insbesondere jede Windung, eine Anzahl n von geraden Windungsabschnitten aus, wobei gilt: n = N. Ist der Träger beispielsweise als Achteck ausgebildet, so ist eine jeweilige Windung der Spule vorzugsweise achteckig und spiralförmig gewickelt. Vorzugsweise sind die geraden Windungsabschnitte parallel zu den geradlinigen und/oder ebenen Seitenbereichen bzw. zu den Seiten der polygonalen Grundform angeordnet.

Ein Spulen-Modul nach Anspruch 8 gewährleistet eine einfache und flexible Herstellung einer effizienten Spulen-Anordnung. Durch die Ausbildung der mindestens einen Windung, vorzugsweise jeder Windung, wird die von dem Träger vorgegebene Oberfläche zur Anordnung der Spule optimal genutzt. Die geraden Windungsabschnitte der jeweiligen Windung sind insbesondere parallel zu den geradlinigen und/oder ebenen Seitenbereichen des Trägers bzw. zu den Seiten der polygonalen Grundform angeordnet. Die Spule ist vorzugsweise polygonal und spiralförmig gewickelt.

Ein Spulen-Modul nach Anspruch 9 gewährleistet eine einfache und flexible Herstellung einer effizienten Spulen-Anordnung. Das mindestens eine Abstandselement ermöglicht eine mechanisch und/oder elektrisch getrennte bzw. isolierende Anordnung von benachbarten Windungen der Spule. Vorzugsweise umfasst das mindestens eine Abstandselement ein magnetisches Material, insbesondere ein Ferritmaterial. Beispielsweise ist das mindestens eine Abstandselement aus einem Ferritmaterial hergestellt. Durch das mindestens eine Abstandselement wird insbesondere der Proximity-Effekt reduziert, wodurch der Leitungsquerschnitt der Spule besser genutzt und eine Kopplung bei der drahtlosen elektromagnetischen Energieübertragung verbessert wird. Das mindestens eine Abstandselement ist beispielsweise als Ferritfolie ausgebildet. Die Ferritfolie weist vorzugsweise eine Dicke zwischen 50 µm und 200 µm auf. Eine Höhe des mindestens einen Abstandselements entspricht im Wesentlichen einer Höhe der Spule. Vorzugsweise ist das mindestens eine Abstandselement einteilig mit dem Träger ausgebildet und/oder Teil des Trägers.

Der Erfindung liegt ferner die Aufgabe zugrunde, eine Spulen-Anordnung zu schaffen, die in einfacher und flexibler Weise für verschiedene Anwendungen eine effiziente drahtlose elektromagnetische Energieübertragung ermöglicht.

Diese Aufgabe wird durch eine Spulen-Anordnung mit den Merkmalen des Anspruchs 10 gelöst. Vorzugsweise weist die Spulen-Anordnung eine Anzahl K von Spulen-Modulen auf, wobei gilt: 2 ≤ K ≤ 100, insbesondere 6 ≤ K ≤ 80, und insbesondere 10 ≤ K ≤ 60. Vorzugsweise sind bei benachbarten Spulen-Modulen die Träger mechanisch miteinander verbunden und/oder die Spulen elektrisch miteinander verbunden. Die Spulen mehrerer Spulen-Module sind vorzugsweise in Reihe und/oder parallel geschaltet. Die Spulen-Anordnung ist beispielsweise in Form einer Acht aus Spulen-Modulen aufgebaut.

Der Erfindung liegt ferner die Aufgabe zugrunde, ein Verfahren zu schaffen, das in einfacher und flexibler Weise die Herstellung einer effizienten Spulen-Anordnung zur drahtlosen elektromagnetischen Energieübertragung ermöglicht.

Diese Aufgabe wird durch ein Verfahren mit den Merkmalen des Anspruchs 11 gelöst. Die Vorteile des erfindungsgemäßen Verfahrens entsprechen den bereits beschriebenen Vorteilen des erfindungsgemäßen Spulen-Moduls und der erfindungsgemäßen Spulen-Anordnung.

Weitere Merkmale, Vorteile und Einzelheiten ergeben sich aus der nachfolgenden Beschreibung mehrerer Ausführungsbeispiele. Es zeigen:
- Fig. 1: eine perspektivische Ansicht einer Spulen-Anordnung, die aus mehreren Spulen-Modulen gemäß einem ersten Ausführungsbeispiel aufgebaut ist,
- Fig. 2: eine Draufsicht auf eine Unterseite der Spulen-Anordnung in Fig. 1,
- Fig. 3: eine perspektivische Ansicht eines Spulen-Moduls gemäß einem zweiten Ausführungsbeispiel, und
- Fig. 4: eine perspektivische Ansicht eines Spulen-Moduls gemäß einem dritten Ausführungsbeispiel.

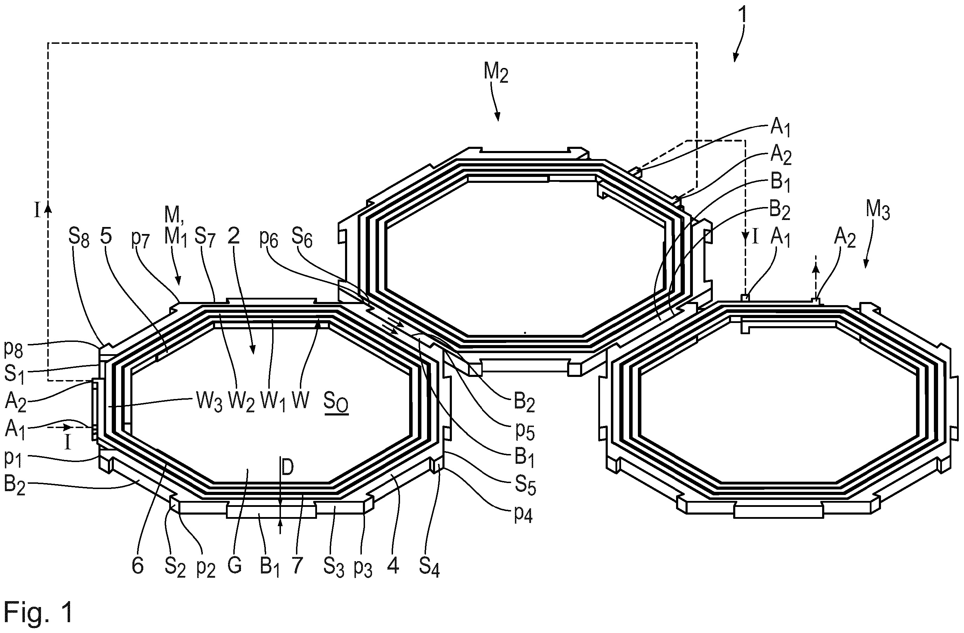

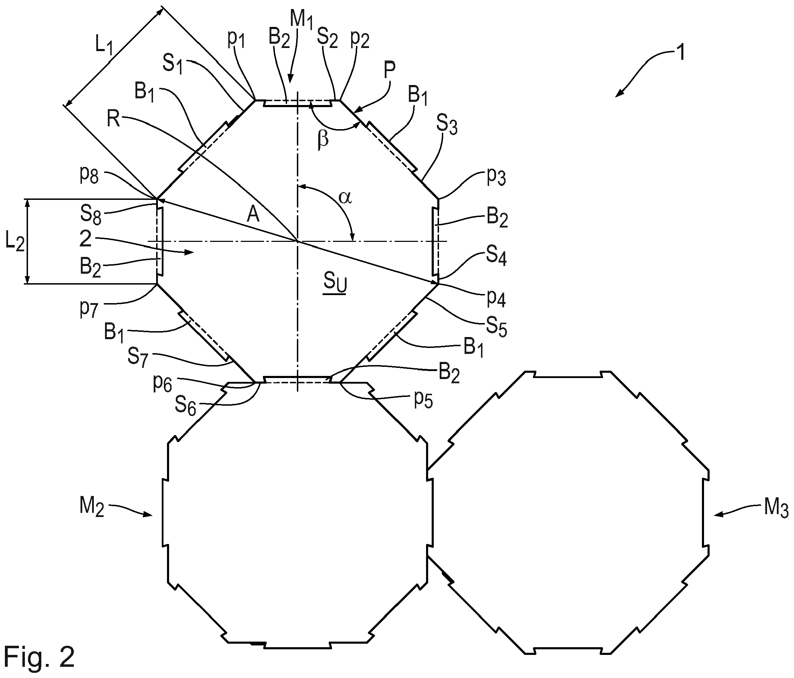

Nachfolgend ist anhand der Fig. 1 und 2 ein erstes Ausführungsbeispiel der Erfindung beschrieben. Eine Spulen-Anordnung 1 umfasst mehrere Spulen-Module M, die in Fig. 1 im Einzelnen mit M₁, M₂ und M₃ bezeichnet sind. Die Spulen-Module M₁, M₂ und M₃ sind identisch ausgebildet. Sofern es nachfolgend auf eine Unterscheidung der Spulen-Module M₁, M₂ und M₃ nicht ankommt, werden diese allgemein als Spulen-Modul M bezeichnet. Sofern es nachfolgend auf eine Unterscheidung ankommt, so werden die Spulen-Module mit M₁, M₂ und M₃ bezeichnet.

Nachfolgend ist eines der Spulen-Module M im Detail beschrieben. Das Spulen-Modul M umfasst einen Träger 2, an dem eine Spule 3 angeordnet ist. Der Träger 2 hat eine polygonale Grundform P mit einer Anzahl von N Ecken. Die Ecken werden im Einzelnen mit p₁ bis p_{N} bezeichnet. Im vorliegenden Ausführungsbeispiel gilt: N = 8. Die polygonale Grundform P ist somit ein Achteck bzw. ein Oktogon.

Die polygonale Grundform P weist eine Achse R auf. Die polygonale Grundform P ist um die Achse R drehsymmetrisch mit einem Winkel α = 360°·2/N = 90°. Die polygonale Grundform P weist gleiche Innenwinkel β auf. Die polygonale Grundform P hat erste Seiten mit einer ersten Seitenlänge L₁ und zweite Seiten mit einer Seitenlänge L₂. Die erste Seitenlänge L₁ ist größer als die zweite Seitenlänge L₂. Die Seiten mit den unterschiedlichen Seitenlängen L₁ und L₂ sind in einer Richtung um die Achse R abwechselnd angeordnet.

Der Träger 2 ist plattenförmig ausgebildet. Der Träger 2 umfasst eine Grundplatte G mit einer Oberseite S_{O}, einer Unterseite S_{U} und dazwischen angeordneten Seitenbereiche S₁ bis S_{N}. Im vorliegenden Ausführungsbeispiel weist der Träger 2 acht Seitenbereiche S₁ bis S₈ auf. Die Seitenbereiche S₁ bis S₈ sind geradlinig und eben ausgebildet. Der Träger 2 umfasst in den Seitenbereichen S₁ bis S₈ erste Befestigungselemente B₁ und zweite Befestigungselemente B₂. Die ersten Befestigungselemente B₁ sind in den Seitenbereichen S₁, S₃, S₅ und S₇ angeordnet, wohingegen die zweiten Befestigungselemente B₂ in den Seitenbereichen S₂, S₄, S₆ und S₈ angeordnet sind. Die Befestigungselemente B₁ und B₂ sind unterschiedlich ausgebildet. Die Befestigungselemente B₁ sind als schwalbenschwanzförmiger Vorsprung ausgebildet, wohingegen die zweiten Befestigungselemente B₂ als schwalbenschwanzförmige Ausnehmung ausgebildet sind. Die zweiten Befestigungselemente B₂ sind negativ zu den ersten Befestigungselementen B₁ geformt. Die Befestigungselemente B₁ und B₂ sind einteilig mit einer Grundplatte G des Trägers 2 ausgebildet. Die Befestigungselemente B₁ und B₂ sind derart orientiert, dass ein Verbinden durch eine Bewegung parallel zu der Achse R erfolgt.

Der Träger 2 ist aus einem magnetischen Material, vorzugsweise einem Ferritmaterial. Das Ferritmaterial umfasst insbesondere Mangan und Zink. Der Träger 2 hat in Richtung der Achse R eine Dicke D. Für die Dicke D gilt: 1 mm ≤ D ≤ 12 mm. Der Träger 2 hat quer zu der Achse R eine maximale Abmessung A. Für die maximale Abmessung A gilt: 15 mm ≤ A ≤ 200 mm.

Der Träger 2 umfasst einen äußeren Rahmen 4, der an der Oberseite Sₒ angeordnet ist. Der Rahmen 4 ist einteilig mit der Grundplatte G ausgebildet. Der äußere Rahmen 4 ist somit aus einem magnetischen Material, beispielsweise einem Ferritmaterial, ausgebildet. Der Rahmen 4 ist entsprechend der polygonalen Grundform P geformt und in dem Seitenbereich S₁ offen ausgebildet.

Innerhalb des äußeren Rahmens 4 ist die Spule 3 angeordnet. Die Spule 3 ist spiralförmig um die Achse R gewickelt. Die Spule 3 weist im Wesentlichen drei Windungen auf, die im Einzelnen mit W₁, W₂ und W₃ bezeichnet sind. Die Windungen W₁ bis W₃ sind in einer gemeinsamen Ebene angeordnet. Der Querschnitt der Spule 3 liegt vorzugsweise zwischen 1 mm² und 10 mm².

Jede der Windungen W₁ bis W₃ ist polygonal gewickelt, so dass jede der Windungen W₁ bis W₃ eine Anzahl n von geraden Windungsabschnitten w ausbildet. Es gilt: n = N. Dies bedeutet, dass die Windungen W₁ bis W₃ eine polygonale Form haben, die der polygonalen Grundform P entspricht. Die Windungsabschnitte w verlaufen parallel zu den Seitenbereichen S₁ bis S₈ bzw. parallel zu den Seiten der polygonalen Grundform P. Die Spule 3 umfasst einen inneren Anschluss A₁ und einen äußeren Anschluss A₂. Der innere Anschluss A₁ ist mit der Windung W₁ verbunden und unterhalb der Windungen W₂, W₃ und des äußeren Anschlusses A₂ nach außen geführt. Der äußere Anschluss A₂ ist mit der Windung W₃ verbunden. Die Anschlüsse A₁ und A₂ sind in dem Seitenbereich S₁ angeordnet.

Der Träger 2 umfasst ferner einen inneren Rahmen 5, der an einer der Achse R zugewandten Seite der Spule 3 angeordnet ist. Der innere Rahmen 5 ist einteilig mit der Grundplatte G ausgebildet. Der innere Rahmen 5 ist somit aus einem magnetischen Material, beispielsweise einem Ferritmaterial, ausgebildet. Der innere Rahmen 5 hat eine polygonale Form, die der polygonalen Grundform P entspricht. Die Seiten des inneren Rahmens 5 verlaufen parallel zu den Seiten des äußeren Rahmens 4. Der innere Rahmen 5 ist zu dem Seitenbereich S₁ hin offen ausgebildet.

Zwischen den Windungen W₁ und W₂ sowie den Windungen W₂ und W₃ ist jeweils ein Abstandselement 6, 7 angeordnet. Die Abstandselemente 6, 7 sind einteilig mit der Grundplatte G ausgebildet und Teil des Trägers 2. Die Abstandselemente 6, 7 sind somit aus einem magnetischen Material, beispielsweise einem Ferritmaterial, ausgebildet. Die Rahmen 4, 5 sind somit aus einem magnetischen Material, beispielsweise einem Ferritmaterial, ausgebildet. Die Abstandselemente 6, 7 haben eine polygonale Form entsprechend den Windungen W₁ bis W₃. Die Abstandselemente 6, 7 sind zu dem Seitenbereich S₁ hin offen ausgebildet.

Zur Herstellung der Spulen-Anordnung 1 werden die Spulen-Module M₁, M₂ und M₃ mechanisch verbunden. Hierzu wird das Spulen-Modul M₂ mittels eines ersten Befestigungselements B₁ mit einem zweiten Befestigungselement B₂ des Spulen-Moduls M₁ verbunden. Weiterhin wird das Spulen-Modul M₂ mittels eines ersten Befestigungselements B₁ mit einem zweiten Befestigungselement B₂ des Spulen-Moduls M₃ verbunden. Hierdurch weist die Spule-Anordnung 1 eine Winkelform auf. Weitere SpulenModule M können in entsprechender Weise verbunden werden, so dass die Spulen-Anordnung 1 je nach Anwendung eine gewünschte Form ausbilden kann, beispielsweise die Form einer Acht.

Die Spulen-Module M₁, M₂ und M₃ werden weiterhin elektrisch miteinander verbunden. Die Spulen 3 der Spulen-Module M₁, M₂ und M₃ werden derart in Reihe geschaltet, dass die Spulen 3 der benachbarten SpulenModule M₁ und M₂ sowie der benachbarten Spulen-Module M₂ und M₃ in den jeweiligen mechanischen Verbindungsbereichen in gleichen Richtungen von einem Strom durchfließbar sind. Hierzu ist der Anschluss A₂ des Spulen-Moduls M₁ mit dem Anschluss A₂ des Spulen-Moduls M₂ und der Anschluss A₁ des Spulen-Moduls M₂ mit dem Anschluss A₁ des Spulen-Moduls M₃ verbunden. Dies ist in Fig. 1 durch eine gestrichelte Linie und Pfeile für den Stromfluss I veranschaulicht.

Dadurch, dass die Spulen-Module M in einfacher und flexibler Weise zu einer Spulen-Anordnung 1 verbunden werden können, weist die Spulen-Anordnung 1 eine hohe Effizienz bei der drahtlosen elektromagnetischen Energieübertragung auf. Das Spulen-Modul M kann einfach und automatisch hergestellt werden.

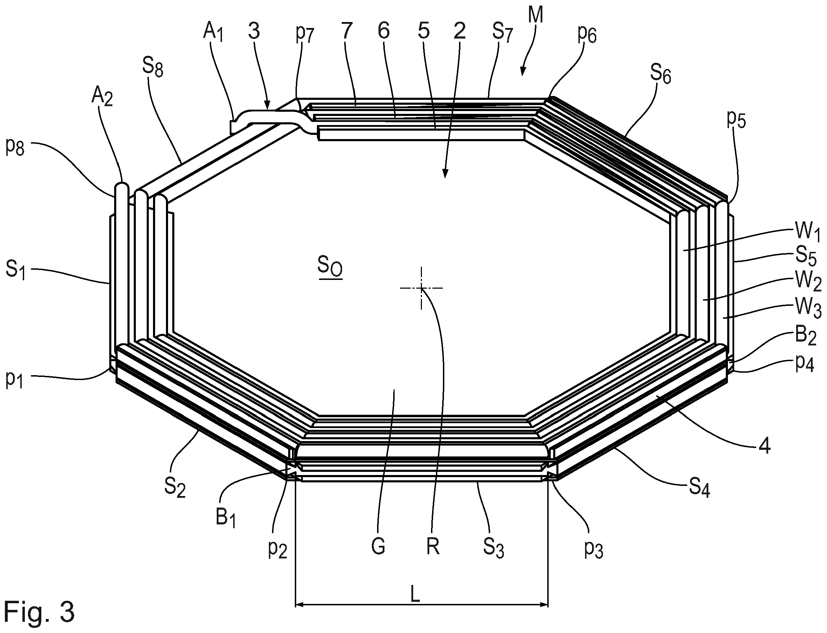

Nachfolgend ist anhand von Fig. 3 ein zweites Ausführungsbeispiel der Erfindung beschrieben. Im Unterschied zu dem ersten Ausführungsbeispiel sind in den Seitenbereichen S₂, S₄, S₆ und S₈ die ersten Befestigungselemente B₁ angeordnet, wohingegen in den Seitenbereichen S₁, S₃, S₅ und S₇ die zweiten Befestigungselemente B₂ angeordnet sind. Die ersten Befestigungselemente B₁ sind als schwalbenschwanzförmige Vorsprünge ausgebildet, die an dem Grundkörper G angeordnet sind. Demgegenüber sind die zweiten Befestigungselemente B₂ als schwalbenschwanzförmige Ausnehmungen ausgebildet. Die Befestigungselemente B₁ und B₂ sind derart orientiert, dass das mechanische Verbinden von zwei Spulen-Modulen M durch eine Bewegung parallel zu der Oberseite S_{O} der Grundplatte G erfolgt. Die Seitenbereiche S₁ bis S₈ haben eine gleiche Länge L, so dass die polygonale Grundform P regelmäßig ist. Der Anschluss A₁ ist oberhalb der Windungen W₂, W₃ nach außen geführt. Hinsichtlich des weiteren Aufbaus und der weiten Funktionsweise des Spulen-Moduls M wird auf das vorangegangene Ausführungsbeispiel verwiesen.

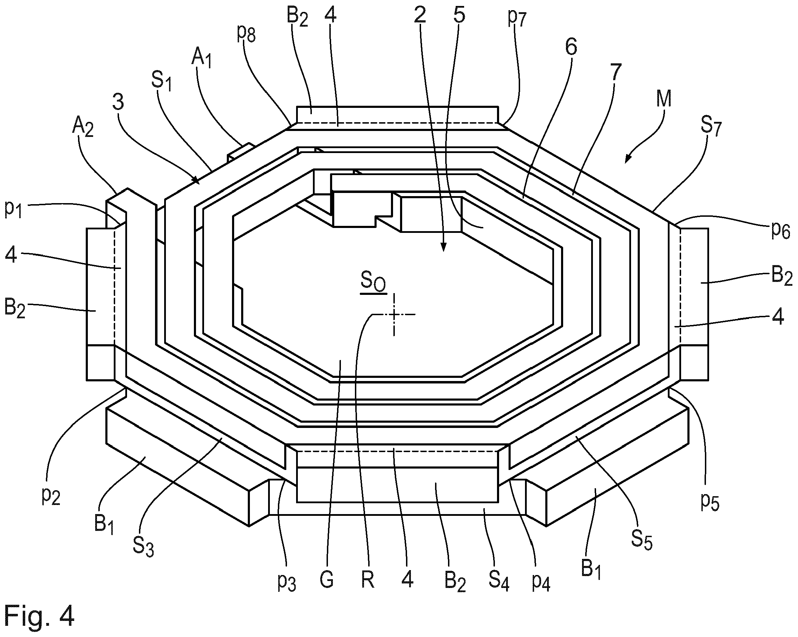

Nachfolgend ist anhand von Fig. 4 ein drittes Ausführungsbeispiel der Erfindung beschrieben. Im Unterschied zu den vorangegangenen Ausführungsbeispielen sind die ersten Befestigungselemente B₁ als unten angeordnete Vorsprünge ausgebildet, wohingegen die zweiten Befestigungselemente B₂ als oben angeordnete Vorsprünge ausgebildet sind. Die ersten Befestigungselemente B₁ sind seitlich an der Grundplatte G angeordnet, wohingegen die zweiten Befestigungselemente B₂ an der Oberseite Sₒ der Grundplatte G und an dem äußeren Rahmen 4 angeordnet sind und sich seitlich nach außen erstrecken. Der äußere Rahmen 4 ist in den Seitenbereichen S₁, S₃, S₅ und S₇ offen ausgebildet bzw. unterbrochen. Zum mechanischen Verbinden wird ein erstes Befestigungselement B₁ und ein zweites Befestigungselement B₂ benachbarter Spulen-Module M übereinander angeordnet, so dass diese überlappen. Im Überlappungsbereich werden die Befestigungselemente B₁ und B₂ miteinander verbunden. Die Verbindung kann beispielsweise stoffschlüssig mittels eines Klebstoffs und/oder formschlüssig über ein Profil und ein Gegenprofil erfolgen. Hinsichtlich des weiteren Aufbaus und der weiteren Funktionsweise des Spulen-Moduls M wird auf die vorangegangenen Ausführungsbeispiele verwiesen.

## Patentansprüche

1. Spulen-Modul (M) zur Herstellung einer Spulen-Anordnung mit
- einem Träger (2),
-- der eine polygonale Grundform (P) mit einer Anzahl N von Ecken (p₁ bis p_{N}) hat, wobei gilt: 4 ≤ N ≤ 12, und wobei die polygonale Grundform (P) drehsymmetrisch mit einem Winkel von 360°·2/N ist,
-- der ein magnetisches Material umfasst,
- einer an dem Träger (2) angeordneten Spule (3), wobei der Träger (2) Seitenbereiche (S₁ bis S_{N}) umfasst, **dadurch gekennzeichnet, dass** in zumindest zwei der Seitenbereiche (S₁ bis S_{N}) ein jeweiliges Befestigungselement (B₁, B₂) angeordnet ist.

2. Spulen-Modul nach Anspruch 1, **dadurch gekennzeichnet, dass** die Anzahl N der Ecken (p₁ bis p_{N}) gerade ist.

3. Spulen-Modul nach Anspruch 1 oder 2, **dadurch gekennzeichnet, dass** die polygonale Grundform (P) drehsymmetrisch mit einem Winkel von 360°/N ist.

4. Spulen-Modul nach mindestens einem der vorangegangenen Ansprüche, **dadurch gekennzeichnet, dass** der Träger (2) plattenförmig ist.

5. Spulen-Modul nach mindestens einem der vorangegangenen Ansprüche, **dadurch gekennzeichnet,**
**dass** der Träger (2) Seitenbereiche (S₁ bis S_{N}) umfasst, die zumindest abschnittsweise geradlinig und/oder eben ausgebildet sind.

6. Spulen-Modul nach mindestens einem der vorangegangenen Ansprüche, **dadurch gekennzeichnet,**
**dass** in den Seitenbereichen (S₁ bis S_{N}) zumindest zwei unterschiedliche Befestigungselemente (B₁, B₂) angeordnet sind.

7. Spulen-Modul nach mindestens einem der vorangegangenen Ansprüche, **dadurch gekennzeichnet,**
**dass** die Spule (3) mindestens zwei Windungen (W₁ bis W₃) umfasst, die in einer Ebene angeordnet sind.

8. Spulen-Modul nach mindestens einem der vorangegangenen Ansprüche, **dadurch gekennzeichnet,**
**dass** die Spule (3) mindestens eine Windung (W₁ bis W₃) umfasst, die eine Anzahl n von geraden Windungsabschnitten (w) ausbildet, wobei gilt: n = N.

9. Spulen-Modul nach mindestens einem der vorangegangenen Ansprüche, **dadurch gekennzeichnet,**
**dass** zwischen zwei benachbarten Windungen (W₁ bis W₃) der Spule (3) mindestens ein Abstandselement (6, 7) angeordnet ist, das insbesondere ein magnetisches Material umfasst.

10. Spulen-Anordnung zur drahtlosen elektromagnetischen Energieübertragung mit mindestens zwei Spulen-Modulen (M) nach mindestens einem der Ansprüche 1 bis 9, wobei die Spulen (3) der Spulenmodule elektrisch verbunden sind und/oder die Träger (2) der Spulenmodule mechanisch verbunden sind.

11. Verfahren zur Herstellung einer Spulen-Anordnung, umfassend die Schritte:
- Bereitstellen von mindestens zwei Spulen-Modulen (M) nach mindestens einem der Ansprüche 1 bis 9, und
- elektrisches Verbinden der Spulen (3) und/oder mechanisches Verbinden der Träger (2) der mindestens zwei Spulen-Module (M).

## Claims

1. A coil module (M) for the production of a coil assembly having
- a carrier (2),
-- which has a polygonal basic shape (P) having a number N of corners (p₁ to p_{N}), wherein: 4 ≤ N ≤ 12, and wherein the polygonal basic shape (P) is rotationally symmetrical with an angle of 360°·2/N,
-- which comprises a magnetic material,
- a coil (3) arranged on the carrier (2),
wherein the carrier (2) comprises side regions (S₁ to S_{N}), **characterized in that** a respective fastening element (B₁, B₂) is arranged in at least two of the side regions (S₁ to S_{N}).

2. A coil module according to claim 1, **characterized in that** the number N of corners (p₁ to p_{N}) is even.

3. A coil module according to claim 1 or 2, **characterized in that** the polygonal basic shape (P) is rotationally symmetrical with an angle of 360°/N.

4. A coil module according to at least one of the preceding claims, **characterized in**
**that** the carrier (2) is plate-shaped.

5. A coil module according to at least one of the preceding claims, **characterized in**
**that** the carrier (2) comprises side regions (S₁ to S_{N}) which are straight and/or flat at least in sections.

6. A coil module according to at least one of the preceding claims, **characterized in**
**that** at least two different fastening elements (B₁, B₂) are arranged in the side regions (S₁ to S_{N}).

7. A coil module according to at least one of the preceding claims, **characterized in**
**that** the coil (3) comprises at least two windings (W₁ to W₃) which are arranged in one plane.

8. A coil module according to at least one of the preceding claims, **characterized in**
**that** the coil (3) comprises at least one winding (W₁ to W₃) which forms a number n of straight winding portions (w), wherein: n = N.

9. A coil module according to at least one of the preceding claims, **characterized in**
**that** at least one spacer element (6, 7), which in particular comprises a magnetic material, is arranged between two adjacent windings (W₁ to W₃) of the coil (3).

10. A coil assembly for wireless electromagnetic energy transmission having at least two coil modules (M) according to at least one of claims 1 to 9, wherein the coils (3) of the coil modules are electrically connected and/or the carriers (2) of the coil modules are mechanically connected.

11. A method for producing a coil assembly, comprising the steps of:
- providing at least two coil modules (M) according to at least one of claims 1 to 9, and
- electrically connecting the coils (3) and/or mechanically connecting the carriers (2) of the at least two coil modules (M).

## Revendications

1. Module de bobines (M) pour la fabrication d'un ensemble de bobines comprenant
- un support (2),
-- qui a une forme de base polygonale (P) avec un nombre N de coins (p₁ bis p_{N}), où : 4 ≤ N ≤ 12, et où la forme de base polygonale (P) est symétrique en rotation avec un angle de 360°-2/N,
-- qui comprend un matériau magnétique,
- une bobine (3) disposée sur le support (2),
dans lequel le support (2) comprend des zones latérales (S₁ bis S_{N}), **caractérisé en ce qu'**un élément de fixation respectif (B1, B2) est disposé dans au moins deux des zones latérales (S₁ bis S_{N}).

2. Module de bobines selon la revendication 1, **caractérisé en ce que** le nombre N de coins (p₁ bis p_{N}) est pair.

3. Module de bobines selon la revendication 1 ou 2, **caractérisé en ce que** la forme de base polygonale (P) est symétrique en rotation avec un angle de 360°/N.

4. Module de bobines selon au moins l'une quelconque des revendications précédentes, **caractérisé en ce que** le support (2) est en forme de plaque.

5. Module de bobines selon au moins l'une quelconque des revendications précédentes, **caractérisé en ce que**
le support (2) comprend des zones latérales (S₁ bis S_{N}) qui sont réalisées au moins par sections de manière rectiligne et/ou plane.

6. Module de bobines selon au moins l'une quelconque des revendications précédentes, **caractérisé en ce que** dans les zones latérales (S₁ bis S_{N}) sont disposés au moins deux éléments de fixation différents (B₁, B₂).

7. Module de bobines selon au moins l'une quelconque des revendications précédentes, **caractérisé en ce que** la bobine (3) comprend au moins deux spires (W₁ bis W₃) qui sont disposées dans un plan.

8. Module de bobines selon au moins l'une quelconque des revendications précédentes, **caractérisé en ce que** la bobine (3) comprend au moins une spire (W₁ bis W₃) qui forme un nombre n de sections de spires droites (w), où n = N.

9. Module de bobines selon au moins l'une quelconque des revendications précédentes, **caractérisé en ce que** entre deux spires (W₁ bis W₃) voisines de la bobine (3) est disposé au moins un élément d'écartement (6, 7) qui comprend en particulier un matériau magnétique.

10. Ensemble de bobines pour la transmission d'énergie électromagnétique sans fil avec au moins deux modules de bobines (M) selon au moins l'une quelconque des revendications 1 à 9, dans lequel les bobines (3) des modules de bobines sont reliées électriquement et/ou les supports (2) des modules de bobines sont reliés mécaniquement.

11. Procédé de fabrication d'un ensemble de bobines, comprenant les étapes suivantes :
- mise à disposition d'au moins deux modules de bobines (M) selon au moins l'une quelconque des revendications 1 à 9, et
- raccordement électrique des bobines (3) et/ou raccordement mécanique des supports (2) des au moins deux modules de bobines (M).
